# EUROPÄISCHE PATENTSCHRIFT

(11) **EP 3 052 273 B1**
(45) Veröffentlichungstag und Bekanntmachung des Hinweises auf die Patenterteilung: **31.01.2018**
(21) Anmeldenummer: 14772144.3
(22) Anmeldetag: 24.09.2014
(51) Int. Cl.: B25D 17/06, B25D 11/12, F16J 1/18, F16J 1/00

(54) **HANDWERKZEUGMASCHINE**
HAND-HELD POWER TOOL
MACHINE-OUTIL MANUELLE

(30) Priorität: 03.10.2013 EP 13187206
(43) Veröffentlichungstag der Anmeldung: 10.08.2016
(73) Patentinhaber: HILTI Aktiengesellschaft, 9494 Schaan (LI)
(72) Erfinder: GEIGER, Steffen, 80687 München (DE); HAMMERSTINGL, Stefan, 81375 München (DE); HARTMANN, Markus, 87665 Mauerstetten (DE); MANSCHITZ, Erwin, 82110 Germering (DE)
(74) Vertreter: Hilti Aktiengesellschaft Corporate Intellectual Property
(86) Internationale Anmeldenummer: PCT/EP2014/070294
(87) Internationale Veröffentlichungsnummer: WO 2015/049130

(56) Entgegenhaltungen:
- EP-A2- 2 272 630
- DE-A1- 3 634 591
- DE-A1-102010 047 974
- DE-C- 463 599
- FR-A- 1 281 541
- GB-A- 2 153 964

## Beschreibung

### GEBIET DER ERFINDUNG

Die vorliegende Erfindung betrifft eine Handwerkzeugmaschine, insbesondere einen Bohrhammer mit einem pneumatischen Schlagwerk, gemäß dem Oberbegriff von Anspruch 1 und wie aus FR 1 281 541 A bekannt.

Wie unter anderem aus der DE 102008054976 A1 bekannt, beinhaltet das Schlagwerk einen Erregerkolben. Der Erregerkolben ist mittels eines Querbolzens und eines Pleuels an ein Exzenterrad oder äquivalenten Drehantrieb gekoppelt. Der Querbolzen fixiert das Pleuel an dessen Auge in dem Erregerkolben. Der Querbolzen wird durch eine radiale Bohrung in der Mantelfläche des Erregerkolbens eingesetzt. Ein Dichtring zum Versiegeln der pneumatischen Kammer des Schlagwerks ist in die Mantelfläche eingesetzt.

Der Dichtring unterliegt einem erheblichen Verschleiß, und muss bei einer Wartung ausgetauscht werden. Die Wartungsintervalle werden unter anderem durch die Dauerbeständigkeit des Dichtrings vorgegeben.

### OFFENBARUNG DER ERFINDUNG

Die erfindungsgemäße Handwerkzeugmaschine weist die Merkmale des unabhängigen Patentanspruchs 1 auf. Bevorzugte Ausführungsformen sind in den abhängigen Ansprüchen angegeben.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: einen Erregerkolben im Längsschnitt in der Ebene II-II
- Fig. 3: den Erregerkolben im Querschnitt in der Ebene III-III
- Fig. 4: den Erregerkolben im Längsschnitt in der Ebene IV-IV
- Fig. 5: einen Erregerkolben im Längsschnitt in der Ebene V-V
- Fig. 6: den Erregerkolben im Querschnitt in der Ebene VI-VI
- Fig. 7: den Erregerkolben im Längsschnitt in der Ebene VII-VII
- Fig. 8: den Erregerkolben im Längsschnitt in der Ebene VIII-VIII
- Fig. 9: einen Erregerkolben im Längsschnitt in der Ebene IX-IX
- Fig. 10: den Erregerkolben im Längsschnitt in der Ebene X-X

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

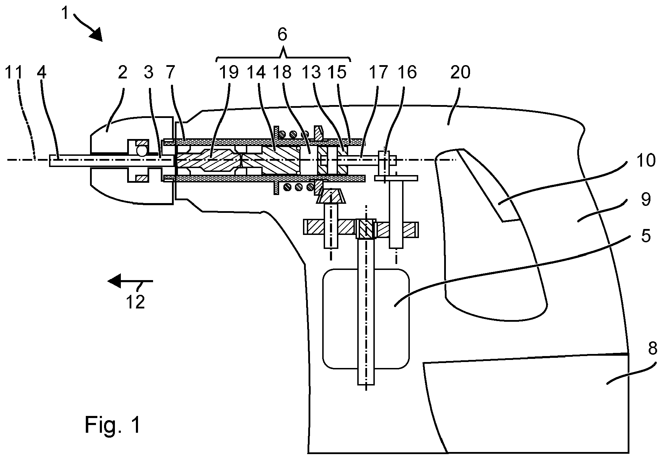

Fig. 1 zeigt als Beispiel einer meißelnden Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrers **4,** eingesetzt werden kann. Einen primären Antrieb des Bohrhammers **1** bildet ein Motor 5, welcher ein Schlagwerk **6** und eine Abtriebswelle **7** antreibt. Ein Batteriepaket **8** oder eine Netzleitung versorgt den Motor **5** mit Strom. Ein Anwender kann den Bohrhammer **1** mittels eines Handgriffs **9** führen und mittels eines Systemschalters **10** den Bohrhammer **1** in Betrieb nehmen. Im Betrieb dreht der Bohrhammer **1** den Bohrer **4** kontinuierlich um eine Arbeitsachse **11** und kann dabei den Bohrer **4** in Schlagrichtung **12** längs der Arbeitsachse **11** in einen Untergrund schlagen.

Das Schlagwerk **6** ist ein pneumatisches Schlagwerk **6.** Ein Erregerkolben **13** und ein Schläger **14** sind in einem Führungsrohr **15** in dem Schlagwerk **6** längs der Arbeitsachse **11** beweglich geführt. Der Erregerkolben **13** ist über einen Exzenter **16** an den Motor **5** angekoppelt und zu einer periodischen, linearen Bewegung gezwungen. Ein Pleuel **17** verbindet den Exzenter **16** mit dem Erregerkolben **13.** Eine Luftfeder gebildet durch eine pneumatische Kammer **18** zwischen dem Erregerkolben **13** und dem Schläger **14** koppelt eine Bewegung des Schlägers **14** an die Bewegung des Erregerkolbens **13** an. Der Schläger **14** kann direkt auf ein hinteres Ende des Bohrers **4** aufschlagen oder mittelbar über einen im Wesentlichen ruhenden Zwischenschläger **19** einen Teil seines Impuls auf den Bohrer **4** übertragen. Das Schlagwerk **6** und vorzugsweise die weiteren Antriebskomponenten sind innerhalb eines Maschinengehäuses **20** angeordnet.

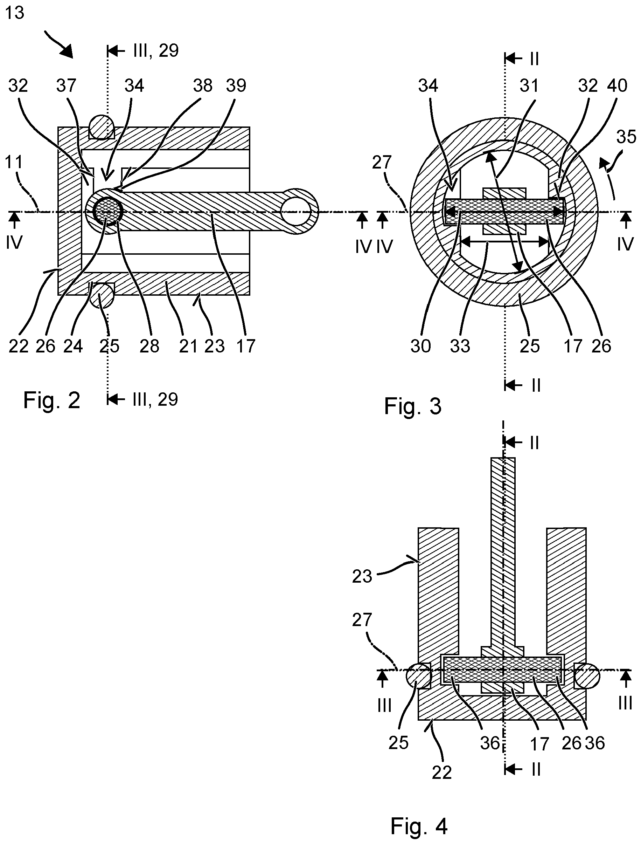

Fig. 2 zeigt den Erregerkolben **13** in einem Längsschnitt in der Ebene II-II; Fig. 3 zeigt den Erregerkolben **13** in einem Querschnitt in der Ebene III-III; Fig. 4 einen Längsschnitt in der Ebene IV-IV. Der Erregerkolben **13** hat einen hohlzylindrischen Grundkörper **21,** der an einer Stirnseite **22** geschlossen ist. Die Stirnseite **22** weist in Richtung zu dem Schläger **14** und komprimiert bzw. dekomprimiert die Luftfeder in der pneumatischen Kammer **18.** Eine Mantelfläche **23** des Grundkörpers **21** gleitet an der Innenwand des Führungsrohrs **15** entlang. Eine ringförmige Nut **24** ist in die Mantelfläche **23** nahe der Stirnseite **22** eingelassen. Ein Dichtring **25** ist in die Nut **24** eingesetzt. Der Dichtring **25** berührt das Führungsrohr **15** und sorgt für einen luftdichten Verschluss der pneumatischen Kammer **18.**

Das Pleuel **17** ist an einem Bolzen **26** in dem Erregerkolben **13** aufgehängt. Der beispielsweise zylindrische Bolzen **26** definiert eine Schwenkachse **27,** um welche das Pleuel **17** schwenken kann. Das Pleuel **17** hat ein Auge **28,** in welches der Bolzen **26** eingesetzt ist. Das Pleuel **17** steht im Wesentlichen radial von dem Bolzen **26** ab. Der Bolzen **26** ist senkrecht zu der Achse **11** in dem Erregerkolben **13** befestigt.

Die Schwenkachse **27** des Bolzens **26** liegt mit dem Dichtring **25** in einer Ebene **29.** Die Schwenkachse **27** verläuft somit durch den Dichtring **25.** Das Auge **28** des Pleuel **17** ist nahe oder am Schwerpunkt des Dichtrings **25.** Der Versatz, längs der Achse **11,** des Schwenkachse **27** zu dem Schwerpunkt ist geringer als die halbe Breite, Abmessung längs der Achse **11,** des Dichtrings **25.** Zwischen dem Pleuel **17** und dem Dichtring **25** wirkende Drehmomente können hierdurch vorteilhaft für die Dichteigenschaft und die Dauerbelastung des Dichtrings minimiert werden.

Der Bolzen **26** liegt vollständig innerhalb des Erregerkolbens **13** und der Erregerkolben **13** hat im Bereich des Bolzens **26** eine vollständig geschlossene Mantelfläche **23.** Die Befestigung des Bolzens **26** in dem Erregerkolben **13** erfolgt durch einen Drehverschluss, beispielsweise einem Bajonettverschluss. Der Bolzen **26** kann in einer Winkelorientierung in den hohlzylindrischen Grundkörper **21** eingesetzt werden. Eine Länge **30** des Bolzens **26** ist geringer als die radiale Innenabmessung **31** des Grundkörpers **21** bei dieser ersten Winkelorientierung. Der Grundkörper **21** hat einen radial vorstehenden Steg **32,** welcher in einer anderen, zweiten Winkelorientierung die Innenabmessung **33** auf ein geringeres Maß als die Länge **30** des Bolzens **26** verringert. Der Steg **32** ist auf der axialen Höhe des Dichtrings **25** mit einer Nut **34** versehen, die parallel zu der Umfangsrichtung **35** verläuft. Die Breite, Abmessung längs der Achse **11,** der Nut **34** ist etwa gleich dem Durchmesser des Bolzens **26.** Der Bolzen **26** kann in die zweite Winkelorientierung gedreht werden, wobei seine das Auge **28** überragenden Enden **36** in die Nut **34** eingeführt werden. Die senkrecht zu der Achse **11** verlaufenden Flanken **37, 38** der Nut **34** klemmen den Bolzen **26** ein. Die Nut **34** kann mit einem Widerhaken **39** versehen sein, welcher ein Rückdrehen des Bolzens **26** in die erste Winkelorientierung hemmt. Vorzugsweise ist die Nut **34** in einer Umfangsrichtung **35** durch eine zur Achse **11** parallel laufende Flanke **40** geschlossen, wodurch ein Drehen über die zweite Winkelorientierung hinaus gehemmt ist.

Bei der Montage wird das Pleuel **17** zuerst mit seinem Auge **28** auf dem Bolzen **26** vormontiert, bevor der Bolzen **26** in den Erregerkolben **13** eingeschoben und durch verdrehen gesichert wird.

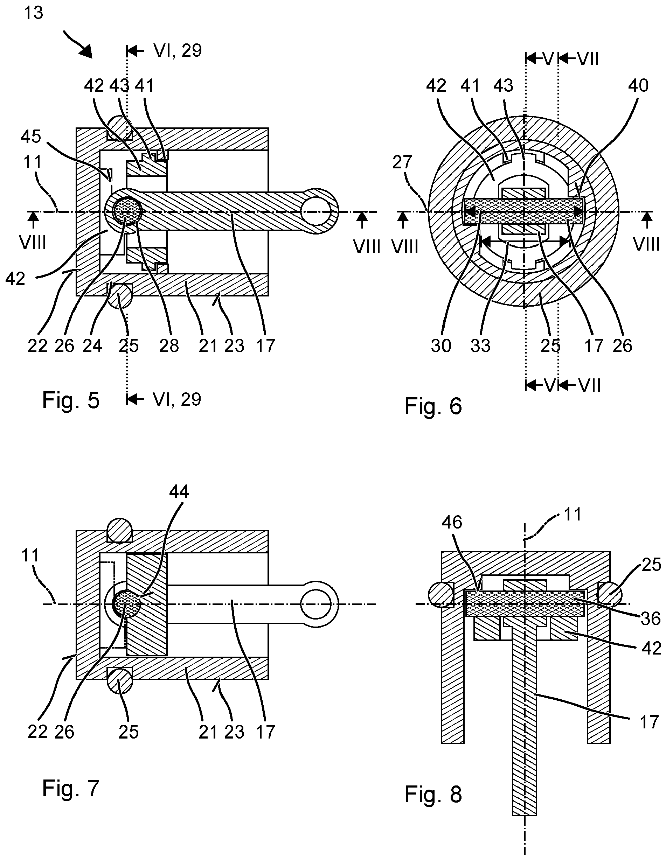

Fig. 5 bis Fig. 7 zeigen eine Abwandlung des Erregerkolbens **13.** Der Erregerkolben **13** hat einen hohlzylindrischen Grundkörper **21,** der an einer Stirnseite **22** geschlossen ist. Der Dichtring **25** umspannt die geschlossene Mantelfläche **23** des Grundkörpers **21** Der zylindrische Bolzen **26** definiert die Schwenkachse **27,** um welche das Pleuel **17** schwenkbar aufgehängt ist. Die Schwenkachse **27** liegt mit dem Dichtring **25** in einer Ebene **29.**

Der Bolzen **26** ist mit einem Drehverschluss in dem Erregerkolben **13** befestigt. Der Bolzen **26** ist zwischen der Stirnseite **22** des Erregerkolbens **13** und zwei radial nach Innen vorstehenden Stegen **41** eingespannt. Ein Teller **42** überbrückt den axialen Abstand zwischen den Stegen **41** und dem Bolzen **26.** Der Teller **42** hat zwei radial vorstehende Finger **43,** welche an den zwei radial nach Innen vorstehende Stege **41** des Grundkörpers **21** anliegen. Der Teller **42** hat eine halbzylindrische Aussparung **44,** welche an dem Bolzen **26** anliegt. Der Bolzen **26** liegt ferner an einer zur Achse **11** senkrechten, ringförmigen Flanke **45** an der Stirnseite **22** an. Anschläge **46** mit einer in Umfangsrichtung **35** weisenden Flanke **40** stehen längs der Achse **11** von der Flanke **45** vor.

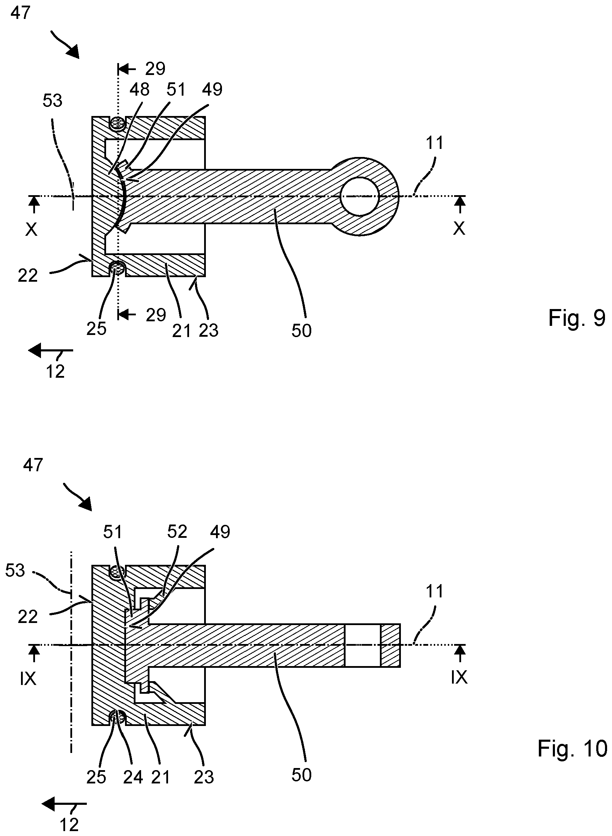

Fig. 9 und 10 zeigen einen weiteren Erregerkolben **47.** Der Erregerkolben **47** ist an ein Pleuel **17** angebunden. Der Erregerkolben **47** hat an seiner der Stirnseite **22** gegenüberliegenden Innenseite eine Erhebung **48.** Die Erhebung **48** hat die Form eines Zylindersegments. Die Oberfläche **49** der Erhebung **48** hat einen konstanten Krümmungsradius. Der Krümmungsradius ist vorzugsweise größer als der Abstand der Erhebung zu der Stirnseite **22.** Entsprechend liegt die Achse **53** in Schlagrichtung **12** versetzt, außerhalb des Erregerkolbens **13.** Die Oberfläche **49** liegt vorzugsweise innerhalb des Dichtrings **25,** d.h. der Dichtring **25** und die Oberfläche **49** überlappen längs der Arbeitsachse **11.** Die von dem Dichtring **25** definierte Ebene **29** schneidet vorzugsweise die konvexe Oberfläche **49.** Das Pleuel **50** hat ein zu einer Schale **51** geformtes Ende. Die Schale **51** hat eine konvexe Oberfläche, deren Krümmungsradius gleich dem der Erhebung **48** ist. Die Schale **51** liegt auf der Erhebung **48** auf und kann um die Achse **53** geschwenkt an der Erhebung **48** gleiten. Die Schale **51** leitet Schubkräfte längs der Schlagrichtung **12** in den Erregerkolben **47** ein.

Die Schale 51 ist mittels einer Rastverbindung in dem Erregerkolben **47** gehalten. Die Rastverbindung beinhaltet beispielsweise zwei oder mehr schwenkbare Zungen **52,** die radial in den Innenraum des Erregerkolbens **13** vorstehen. Die Zungen **52** liegen beim montierten Pleuel **50** an einer entgegen der Schlagrichtung **12** weisenden Seite der Schale **51** an.

## Patentansprüche

1. Handwerkzeugmaschine mit
einem Antrieb (5),
einem pneumatischen Schlagwerk (6), das einen auf einer Arbeitsachse (11) beweglichen Schläger (14), einen in Schlagrichtung (12) vor dem Schläger (14) angeordneten, durch ein Pleuel (17, 50) an den Antrieb (5) angebundenen Erregerkolben (13; 47) und eine pneumatische Kammer (18), die eine Bewegung des Schlägers (14) an den Erregerkolben (13; 47) ankoppelt, aufweist, wobei das Pleuel (17) um eine Schwenkachse (27; 53) schwenkbar in dem Erregerkolben (13; 47) aufgehängt ist,
wobei der Erregerkolben (13) eine der pneumatischen Kammer (18) zugewandte, geschlossene Stirnseite (22), eine Mantelfläche (23) und eine in die Mantelfläche (23) nahe der Stirnfläche (22) eingelassene Nut (24) aufweist,
einem Dichtring, der in die Nut (24) eingesetzt in einer Ebene liegend die Mantelfläche (23) des Erregerkolbens (13) umspannt,
**dadurch gekennzeichnet, dass** die Schwenkachse (27; 53) in der Ebene oder die Schwenkachse (27) parallel zu der Ebene in Schlagrichtung (12) versetzt ist.

2. Handwerkzeugmaschine nach Anspruch 1, **dadurch gekennzeichnet, dass** das Pleuel (17) an einem Bolzen (26) in dem Erregerkolben (13) aufgehängt ist und eine Achse des Bolzens (26) die Schwenkachse (27) definiert.

3. Handwerkzeugmaschine nach Anspruch 2, **dadurch gekennzeichnet, dass** der Erregerkolben (13) eine vollständig oder wenigstens in dem Bereich des Bolzens (26) geschlossene Mantelfläche (23) aufweist.

4. Handwerkzeugmaschine nach Anspruch 2 oder 3, **dadurch gekennzeichnet, dass** der Bolzen (26) mit einem Drehverschluss in dem Erregerkolben (13) fixiert ist.

5. Handwerkzeugmaschine nach Anspruch 4, **dadurch gekennzeichnet, dass** der Bolzen (26) in ein Auge (28) des Pleuels (17) eingesetzt ist, der Bolzen (26) innerhalb des Erregerkolbens (13) um die Arbeitsachse (11) zwischen zwei Winkelstellungen drehbar ist und die beidseitig das Auge (28) überragenden Enden (36) des Bolzens (26) in einer ersten der Winkelstellungen längs der Arbeitsachse (11) verschiebbar und in einer zweiten der Winkelstellungen längs der Arbeitsachse (11) gehemmt ist.

6. Handwerkzeugmaschine nach Anspruch 5, **dadurch gekennzeichnet, dass** der Erregerkolben (13) einen hohlzylindrischen Grundkörper (21) mit einer ersten radial vorstehenden, gegenüber der Arbeitsachse (11) geneigten Flanke (37) und einer zweiten radial vorstehenden, gegenüber der Arbeitsachse (11) geneigten Flanke (38) aufweist, und eines der Enden (36) zwischen der ersten Flanke (37) und der zweiten Flanke (38) eingespannt ist.

7. Handwerkzeugmaschine nach Anspruch 1, **dadurch gekennzeichnet, dass** das Pleuel (50) eine Schale (51) aufweist, die an einer zylindrischen Erhebung (48) in dem Erregerkolben (47) anliegt.

8. Handwerkzeugmaschine nach Anspruch 7, **dadurch gekennzeichnet, dass** eine Achse (53) der zylindrischen Erhebung (48), welche die Schwenkachse (53) des Pleuel (50) definiert, vor einer Stirnseite (22) des Erregerkolbens (47) liegt.

## Claims

1. Hand-held power tool, comprising
a drive (5),
a pneumatic percussion mechanism (6) having a striker (14) which is movable on a working axis (11), an exciter piston (13; 47) arranged ahead of the striker (14) in the striking direction (12) and connected to the drive (5) by a connecting rod (17, 50), and a pneumatic chamber (18) which couples a movement of the striker (14) to the exciter piston (13; 47), the connecting rod (17) being suspended swivellably about a pivot axis (27; 53) in the exciter piston (13; 47),
wherein the exciter piston (13) has a closed front face (22) oriented towards the pneumatic chamber (18), a lateral surface (23) and a groove (24) formed in the lateral surface (23) near the front face (22),
a sealing ring which is fitted in the groove (24), lies in a plane and encircles the lateral surface (23) of the exciter piston (13),
**characterised in that** the pivot axis (27; 53) lies in the plane or the pivot axis (27) is offset parallel to the plane in the striking direction (12).

2. Hand-held power tool according to Claim 1, **characterised in that** the connecting rod (17) is suspended on a pin (26) in the exciter piston (13) and an axis of the pin (26) defines the pivot axis (27).

3. Hand-held power tool according to Claim 2, **characterised in that** the exciter piston (13) has a lateral surface (23) which is completely closed, or is closed at least in the region of the pin (26).

4. Hand-held power tool according to Claim 2 or 3, **characterised in that** the pin (26) is fixed in the exciter piston (13) by a turn-lock fastener.

5. Hand-held power tool according to Claim 4, **characterised in that** the pin (26) is fitted in an eye (28) of the connecting rod (17), the pin (26) is rotatable inside the exciter piston (13) about the working axis (11) between two angular positions and the ends (36) of the pin (26) which project beyond the eye (28) on both sides are displaceable along the working axis (11) in a first of the angular positions and are blocked along the working axis (11) in a second of the angular positions.

6. Hand-held power tool according to Claim 5, **characterised in that** the exciter piston (13) has a hollow-cylindrical main body (21) with a first radially projecting flank (37) inclined with respect to the working axis (11) and a second radially projecting flank (38) inclined with respect to the working axis (11), and one of the ends (36) is clamped between the first flank (37) and the second flank (38).

7. Hand-held power tool according to Claim 1, **characterised in that** the connecting rod (50) has a dish-shaped surface (51) which is in contact with a cylindrical elevation (48) in the exciter piston (47).

8. Hand-held power tool according to Claim 7, **characterised in that** an axis (53) of the cylindrical elevation (48), which defines the pivot axis (53) of the connecting rod (50), lies ahead of an end face (22) of the exciter piston (47).

## Revendications

1. Machine-outil manuelle comportant :
un mécanisme d'entraînement (5),
un mécanisme de percussion pneumatique (6) comportant un percuteur (14) mobile sur un axe de travail (11), un piston excitateur (13 ; 47) relié au mécanisme d'entraînement (5) par une bielle (17, 50) et agencé avant le percuteur (14) dans une direction de percussion (12), et une chambre pneumatique (18) couplant un mouvement du percuteur (14) au piston excitateur (13 ; 47), dans laquelle la bielle (17) est suspendue dans le piston excitateur (13 ; 47) de manière à pouvoir pivoter autour d'un axe de pivotement (27 ; 53),
dans laquelle le piston excitateur (13) comporte une face avant (22) fermée dirigée vers la chambre pneumatique (18), une surface extérieure (23) et une gorge (24) usinée dans la surface extérieure (23) près de la face avant (22),
une bague d'étanchéité placée dans la gorge (24) et entourant la surface extérieure (23) du piston excitateur (13) située dans un plan,
**caractérisée en ce que** l'axe de pivotement (27 ; 53) se situe dans le plan ou l'axe de pivotement (27) est décalé parallèlement au plan dans la direction de percussion (12).

2. Machine-outil manuelle selon la revendication 1, **caractérisée en ce que** la bielle (17) est suspendue à une goupille (26) dans le piston excitateur (13) et un axe de la goupille (26) définit l'axe de pivotement (27) .

3. Machine-outil manuelle selon la revendication 2, **caractérisée en ce que** le piston excitateur (13) comporte une surface extérieure (23) fermée entièrement ou au moins dans la zone de la goupille (26).

4. Machine-outil manuelle selon la revendication 2 ou 3, **caractérisée en ce que** la goupille (26) est fixée dans le piston excitateur (13) avec une fermeture tournante.

5. Machine-outil manuelle selon la revendication 4, **caractérisée en ce que** la goupille (26) est placée dans un oeil (28) de la bielle (17), la goupille (26) peut tourner à l'intérieur du piston excitateur (13) autour de l'axe de travail (11) entre deux positions angulaires, et les extrémités (36) de la goupille (26) faisant saillie des deux côtés de l'oeil (28) peuvent être déplacées dans une première des positions angulaires le long de l'axe de travail (11) et être bloquées dans une seconde des positions angulaires le long de l'axe de travail (11).

6. Machine-outil manuelle selon la revendication 5, **caractérisée en ce que** le piston excitateur (13) comporte un corps principal cylindrique creux (21) avec un premier flanc (37) incliné par rapport à l'axe de travail (11), faisant saillie radialement, et un second flanc (38) incliné par rapport à l'axe de travail (11) et faisant radialement saillie, et l'une des extrémités (36) est insérée entre le premier flanc (37) et le second flanc (38).

7. Machine-outil manuelle selon la revendication 1, **caractérisée en ce que** la bielle (50) comporte une coque (51) qui est en contact avec une saillie cylindrique (48) dans le piston excitateur (47).

8. Machine-outil manuelle selon la revendication 7, **caractérisée en ce qu'**un axe (53) de la saillie cylindrique (48) qui définit l'axe de pivotement (53) de la bielle (50), se situe avant une face avant (22) du piston excitateur (47).
